# EUROPEAN PATENT SPECIFICATION

(11) **EP 2 972 095 B1**
(45) Date of publication and mention of the grant of the patent: **17.02.2021**
(21) Application number: 14772629.3
(22) Date of filing: 10.03.2014
(51) Int. Cl.: G01C 21/32, G01C 21/36, G09G 5/00, G06F 3/00

(54) **SYSTEM AND METHOD FOR CONTEXT DEPENDENT LEVEL OF DETAIL ADJUSTMENT FOR NAVIGATION MAPS AND SYSTEMS**
SYSTEM UND VERFAHREN ZUR KONTEXTABHÄNGIGEN DETAILNIVEAUEINSTELLUNG VON NAVIGATIONSKARTEN UND -SYSTEMEN
SYSTÈME ET PROCÉDÉ POUR RÉGLAGE CONTEXTUEL DU NIVEAU DE DÉTAIL POUR LES CARTES ET SYSTÈMES DE NAVIGATION

(30) Priority: 14.03.2013 US 201313828654
(43) Date of publication of application: 20.01.2016
(73) Proprietor: Robert Bosch GmbH, 70442 Stuttgart (DE)
(72) Inventor: REN, Liu, Cupertino, CA 95014 (US); ZOU, Lincan, Sunnyvale, CA 94087 (US)
(86) International application number: PCT/US2014/022698
(87) International publication number: WO 2014/159253

(56) References cited:
- EP-A2- 0 802 516
- EP-A2- 0 803 706
- EP-A2- 1 189 176
- DE-A1-102006 059 922
- JP-A- 2004 117 294
- JP-A- 2005 292 064
- JP-A- 2007 093 661
- KR-A- 20090 067 536
- KR-A- 20110 055 267
- US-A1- 2007 152 984
- US-A1- 2008 180 439
- US-A1- 2013 024 113

## Description

### FIELD

This disclosure relates generally to the field of in-vehicle information systems and, more specifically, to systems and methods that provide selected visual mapping and navigation information to an operator.

### BACKGROUND

Modern motor vehicles often include one or more in-vehicle information systems that provide a wide variety of information and entertainment options to occupants in the vehicle. Common services that are provided by the in-vehicle information systems include, but are not limited to, vehicle state and diagnostic information, mapping and navigation applications, hands-free telephony, radio and music playback, and traffic condition alerts. In-vehicle information systems often include multiple input and output devices. For example, traditional buttons and control knobs that are used to operate radios and audio systems are commonly used in vehicle information systems. More recent forms of vehicle input include touchscreen input devices that combine input and display into a single screen, as well as voice-activated functions where the in-vehicle information system responds to voice commands. Examples of output systems include mechanical instrument gauges, output display panels, such as liquid crystal display (LCD) panels, and audio output devices that produce synthesized speech.

In-vehicle navigation systems that display maps including points of interest, programmed destinations, and travel routes for a vehicle are widely used in modern vehicles. In-vehicle navigation systems include both systems that are integrated with the vehicle to display maps and navigation information through in-vehicle displays, and portable navigation devices, such as global positioning system (GPS) devices, which include dedicated mapping and navigation devices and smartphones or other mobile electronic devices that execute software mapping and navigation software programs. Many in-vehicle navigation systems display a two-dimensional map to the end user. The two dimensional map often includes a highlighted route that leads to a programmed destination, and optionally displays information about points of interest in the map. Points of interest include a wide range of locations that may be of interest to the operator of the navigation device including, but not limited to, stores, gas stations, restaurants, schools, religious facilities, medical facilities, parking lots, and the like. In one operating mode, the operator of the navigation system views maps of different geographic regions to find a destination or other point of interest. In another operating mode, the navigation device synchronizes the display of the map with the location of the navigation device, such as the location of a vehicle with an in-vehicle navigation system, and updates the map display to depict the region around the vehicle as the vehicle moves.

As in-vehicle navigation devices and navigation software have become more sophisticated, the navigation devices present greater amounts of information with greater detail over time. For example, while older navigation devices only displayed simple road maps, newer devices now display photographically realistic aerial views of the map and include graphics and icons that identify points of interest in the map. Some devices are capable of producing three-dimensional representations of the maps, including a three-dimensional depiction of terrain, man-made structures, and other geographic features. The three-dimensional depictions provide additional information about the landscape and different points of interest that are present in different locations on the map. The three-dimensional depiction of the region provides an interface that more closely approximates the actual topography and landmarks in the real world environment that the map represents. Three dimensional models of landmarks, such as large buildings, also serve as navigation guides to the user since the user can see the landmark in the real world and the three dimensional model of the landmark in the map during navigation.

While sophisticated depictions of different geographic regions provide a more realistic view of the environment around a vehicle, the sheer amount of information that is depicted in the complex two and three-dimensional models can be counterproductive in some situations. For example, a photo-realistic two-dimensional map may include scenery and other visual information that increases the difficulty in discerning specific features such as roads in the displayed map. In three-dimensional maps, as in the real world, some objects in a three-dimensional scene that are located near the observer block the view of some other objects that are farther away from the observer. Additionally, a complex three-dimensional scene often includes landmarks and other objects that are not relevant to following the navigation route. During operation of the vehicle, the two and three-dimensional scenes with a high level of detail increase the required cognitive load of the operator to analyze the scene and extract useful information from the display. An increased cognitive load often results in a corresponding delay in taking action to guide the vehicle to follow the navigation route, or in the operator inadvertently failing to follow the navigation route. In other situations, however, the complex information and high level of detail in map display can aid the vehicle operator in planning a route or finding the location of a destination.

In the prior art, the following documents relate to the technological background of the present invention.

| | |
|---|---|
| D1 | US 2013/024113 A1 (WENG FULIANG [US] ET AL) 24 January 2013 (2013-01-24) |
| D2 | EP 1 189 176 A2 (ALPINE ELECTRONICS INC [JP]) 20 March 2002 (2002-03-20) |
| D3 | DE 10 2006 059922 A1 (BOSCH GMBH ROBERT [DE]) 26 June 2008 (2008-06-26) |
| D4 | EP 0 802 516 A2 (ZANAVY INFORMATICS KK [JP]) 22 October 1997 (1997-10-22) |
| D5 | EP 0 803 706 A2 (PIONEER ELECTRONIC CORP [JP]) 29 October 1997 (1997-10-29) |
| D6 | US 2008/180439 A1 (ADABALA NEEHARIKA [IN] ET AL) 31 July 2008 (2008-07-31) |
| D7 | US 2007/152984 A1 (ORDING BAS [US] ET AL) 5 July 2007 (2007-07-05) |

Document D1 discloses a method of displaying an electronic map that includes receiving map data associated with a plurality of objects that are disposed within a geographic area. The map data is analyzed to thereby determine a state or value of a metric associated with one of the objects. The associated object is rendered in a low density or high density within the map depending upon the state or value of the metric.

Document D2 discloses that in a stereoscopic map display method for an on-vehicle navigation apparatus, in displaying a town map, when a threshold value is changed in accordance with the display scale, buildings higher than the threshold value are displayed stereoscopically, and buildings lower than the threshold value are displayed monoscopically Furthermore, of the buildings displayed stereoscopically, buildings as high as or higher than a particular height are displayed as opaque images while the other buildings are displayed as transparent or semitransparent images. Furthermore, in displaying the buildings higher than the threshold value, shades may be drawn as the buildings are projected. D3 to D7 generally relate to navigation systems. In particular, document D4 relates to a situation where a building which occludes a crossing is displayed in a transparent mode.

### SUMMARY

Consequently, the object of the present invention is to provide a method and a navigation system having improvements that generate maps with three-dimensional representations of terrain and other features. This object is solved by a method according to claim 1 and by a navigation system according to claim 10. Further advantageous embodiments and improvements of the invention are listed in the dependent claims. Hereinafter, a detailed discussion of the embodiments of the invention is provided.

### BRIEF DESCRIPTION OF THE DRAWINGS

FIG. 1 is a schematic diagram of an in-vehicle information system that is configured to display maps with varying levels of detail in map features.
FIG. 2 is a block diagram of a process for modifying the display of map features in a map display with reference to changes in a priority threshold parameter.
FIG. 3 is a block diagram of a process for modifying a display of a map features when a first map feature occludes the display of a second map feature that has a higher priority than the first map feature.
FIG. 4 is a first display of a map with a first priority threshold for display of map features in the map.
FIG. 5 is a second display of the map of FIG. 4 during an animation sequence in which three-dimensional graphics models of first group of map features extend from the map.
FIG. 6 is a third display of the map of FIG. 4 after completion of an animation sequence that depicts the three-dimensional graphics models of first group of map features.
FIG. 7 is a fourth display of the map of FIG. 4 during a second animation sequence in which three-dimensional graphics models of a second group of map features extend from the map in addition to the three-dimensional graphics models of the first group of map features.
FIG. 8 is a fifth display of the map of FIG. 4. after completion of the second animation sequence that depicts the three-dimensional graphics models of first group of map features and the second map features
FIG. 9 is a depiction of size modifications for a map feature object based on the priority of the object and a priority threshold used for viewing the object.
FIG. 10 is a depiction of opacity modifications for a map feature object based on the priority of the object and a priority threshold used for viewing the object.
FIG. 11A is a display of a map with a first map feature occluding a view of a second map feature having a higher priority than the first map feature.
FIG. 11B is a display of the map of FIG. 11A with the first map feature being displayed with a reduced opacity to expose the second map feature.
FIG. 11C is a display of the map of FIG. 11A with the first map feature being reduced in size to expose the second map feature.
FIG. 12 is a display of a map with different levels of detail applied to map features with reference to a distance between the map features and a virtual camera in the virtual environment depicting the map and map features.

### DETAILED DESCRIPTION

For the purposes of promoting an understanding of the principles of the embodiments disclosed herein, reference is now be made to the drawings and descriptions in the following written specification. No limitation to the scope of the subject matter is intended by the references.

As used herein, the term "map feature" refers to any graphic corresponding to a physical location that is displayed on a map. Map features include both natural and artificial structures including, but not limited to, natural terrain features, roads, bridges, tunnels, buildings, and any other artificial or natural structure. Some mapping systems display map features using 2D graphics, 3D graphics, or a combination of 2D and 3D graphics. Some map features are displayed using stylized color graphics, monochrome graphics, or photo-realistic graphics.

As used herein, the term "in-vehicle information system" refers to a computerized system that is associated with a vehicle for the delivery of information to an operator and other occupants of the vehicle. In motor vehicles, the in-vehicle information system is often physically integrated with the vehicle and is configured to receive data from various sensors and control systems in the vehicle. In particular, some in-vehicle information systems receive data from navigation systems including satellite-based global positioning systems and other positioning systems such as cell-tower positioning systems and inertial navigation systems. Some in-vehicle information system embodiments also include integrated network devices, such as wireless local area network (LAN) and wide-area network (WAN) devices, which enable the in-vehicle information system to send and receive data using data networks. Data may also come from local storage devices. In an alternative embodiment, a mobile electronic device provides some or all of the functionality of an in-vehicle information system. Examples of mobile electronic devices include smartphones, tablets, notebook computers, handheld GPS navigation devices, and any portable electronic computing device that is configured to perform mapping and navigation functions. The mobile electronic device optionally integrates with an existing in-vehicle information system in a vehicle, or acts as an in-vehicle information system in vehicles that lack built-in navigation capabilities including older motor vehicles, motorcycles, aircraft, watercraft, and many other vehicles including, but not limited to, bicycles and other non-motorized vehicles.

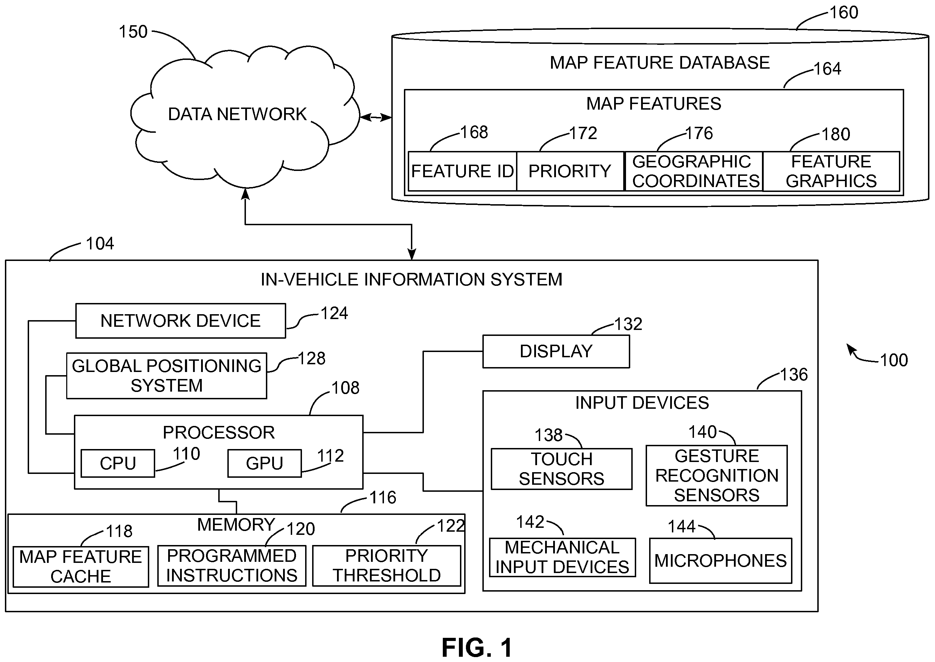

FIG. 1 depicts a mapping system 100 that includes an in-vehicle information system 104 that is communicatively coupled to a geographic data and map feature database 160 through a data network 150. The in-vehicle information system 104 includes a processor 108, a memory 116, a network device 124, global positioning system device 128, display device 132 and one or more input devices 136. The geographic data and map features database 160 stores a plurality of map features 164. In the embodiment of the system 100, each of the map features 164 includes a map feature identifier 168, priority level 172 associated with the map feature, geographic coordinates 176 for the map feature, and a graphical data 180 for generating 2D and/or 3D graphics of the map feature.

In the in-vehicle information system 104, the processor 108 includes one or more integrated circuits that implement the functionality of a central processing unit (CPU) 110 and graphics processing unit (GPU) 112. In some embodiments, the processor is a system on a chip (SoC) that integrates the functionality of the CPU 110 and GPU 112, and optionally other components including the memory 116, network device 124, and global positioning system 128, into a single integrated device. In one embodiment, the CPU is a commercially available central processing device that implements an instruction set such as one of the x86, ARM, Power, or MIPs instruction set families. The GPU includes hardware and software for display of both 2D and 3D graphics. In one embodiment, processor 108 includes software drivers and hardware functionality in the GPU 112 to generate 3D graphics using the OpenGL, OpenGL ES, or Direct3D graphics application programming interfaces (APIs).

During operation, the CPU 110 and GPU 112 execute stored programmed instructions 120 that are retrieved from the memory 116. In one embodiment, the stored programmed instructions 120 include operating system software and one or more software application programs, including a mapping and navigation application program. The processor 108 executes the mapping and navigation program and generates 2D and 3D graphical output corresponding to maps and map features through the display device 132. The processor is configured with software and hardware functionality by storing programmed instructions in one or memories operatively connected to the processor and by operatively connecting the hardware functionality to the processor and/or other electronic, electromechanical, or mechanical components to provide data from sensors or data sources to enable the processor to implement the processes and system embodiments discussed below.

The memory 116 includes both non-volatile memory and volatile memory. The non-volatile memory includes solid-state memories such as NAND flash memory, magnetic and optical storage media, or any other suitable data storage device that retains data when the in-vehicle information system 104 is deactivated or loses electrical power. The volatile memory includes static and dynamic random access memory (RAM) that stores software and data, including graphics data and map feature data, during operation of the in-vehicle information system 104. In addition to the programmed instructions 120, the memory 116 includes a cache of map feature data 118. The map feature data cache 118 includes data corresponding to one or more map features that are retrieved from the map features database 160. In some embodiments, the memory 116 stores a base map of a geographic region and receives additional map features from the map feature database 160. In another embodiment, the memory 116 also retrieves the base map from the map features database 160 or another online mapping service.

The map feature cache 118 stores map features for efficient retrieval as the vehicle travels through a predetermined geographic region. The memory 116 also stores priority threshold data 122. As described below, the in-vehicle information system 104 receives operator input to set the priority threshold, and the processor 108 modifies the display of map features based on the priority threshold to enable the operator to view a map with a desired level of detail. In the embodiment of FIG. 1 the in-vehicle information system 104 retrieves map features from the geographic data and map feature database 160 through the data network 150 and caches map features 118 in the memory 116 for temporary use. In an alternative embodiment, a predetermined database of map features is stored in the memory 116 and the in-vehicle navigation system 104 does not use a data network connection to an external database to retrieve the map feature information.

In the embodiment of FIG. 1, the processor 108 sends and receives data using the network device 124. In a vehicle, the network device 124 is often a wireless network device, such as a wireless wide-area network (WWAN) device, which communicates with radio transceivers in a cellular data network while the vehicle is in motion. The network device 124 optionally includes a wireless local area network (WLAN) device for communication with shorter-range wireless local area networks. Examples of WLAN devices include the IEEE 802.11 family of protocols and Bluetooth protocols. In some embodiments, the network device 124 includes a wired network connection, such as Ethernet or USB, for use when the vehicle is parked or for interfacing with another computing device in the compartment of the vehicle. In the system 100, the processor 108 receives map feature data corresponding to one or more of the map features 164 in the map features database 160 using the network device 124.

In the in-vehicle information system 104, the global positioning system (GPS) 128 identifies a location of the vehicle for use in navigation applications. In one embodiment, the GPS 128 includes a radio receiver that receives signals from orbiting navigation satellites. Commercially available satellite GPS receivers are integrated in some in-vehicle information systems, and many mobile electronic devices include satellite GPS receivers as well. In an alternative embodiment, the global positioning system 128 receives signals from terrestrial transmitters including WWAN and WLAN transmitters. The global positioning system 128 identifies a location of the vehicle using triangulation or other geolocation techniques. Some embodiments include receives for both satellite GPS and terrestrial signals. In some embodiments, the global positioning system 128 further includes an inertial navigation system that assists in identifying the location of the vehicle if signals from the satellite or terrestrial transmitters are unavailable.

The in-vehicle information system 104 includes one or more display devices 132. In one embodiment, the display device 132 is a liquid crystal display (LCD), organic light-emitting diode display (OLED) or other suitable display device that generates image output for the vehicle occupants. Displays are commonly mounted in a dashboard or other fixed location in the vehicle. In an alternative embodiment, the display device 132 is a head-up display (HUD) that is projected onto a windshield of a vehicle or projected onto goggles or glasses that are worn by an occupant in the vehicle.

The input devices 136 in the in-vehicle information system 104 include control devices that enable the occupants in the vehicle to operate the in-vehicle information system 104 and to adjust the priority threshold for display of maps and map features. As used herein, the term "input device" refers to any hardware or software components in the in-vehicle information system 104 that enable the occupants of the vehicle to control the operation of the components in the in-vehicle information system 104, including adjusting the priority threshold for displaying graphics through the display device 132. In one embodiment, the input device 136 includes touch sensors 138. The touch sensors 138 include a touchscreen controller that is integrated with the display device 132, and other touch sensors that are integrated with various surfaces in the vehicle such as the steering wheel and arm rests. The occupants in the vehicle touch the touch sensors 138 and use one or more gestures to produce input signals for the processor 108. In another embodiment, one or more gesture recognition sensors 140 capture movements of the vehicle occupants, including hand movement gestures, eye movements, and facial expressions. Examples of gesture recognition sensors include, but are not limited to, depth sensors, Time-of-Flight (TOF) cameras, infrared sensors, and ultrasonic sensors that record input gesture movements to operate the in-vehicle information system 104. The processor 108 identifies input commands that correspond to predetermined movement gestures in the data that the gesture recognition sensors 140 record in the vehicle. For example, the operator lowers an outstretched hand to increase the priority threshold and reduce the level of detail in the map display, and the operator raises the outstretched hand to decrease the priority threshold and increase the level of detail in the map display in an intuitive manner. In another embodiment, the input devices 136 include mechanical input devices 142 such as mechanical knobs, buttons, and switches that respond to manual manipulation from the vehicle occupants. In another embodiment, the input devices 136 include a voice input system with microphones 144 that record spoken commands from the vehicle occupants. One or more microphones in the vehicle record sounds associated with voice commands and the processor 108 identifies input commands using voice recognition hardware and software modules.

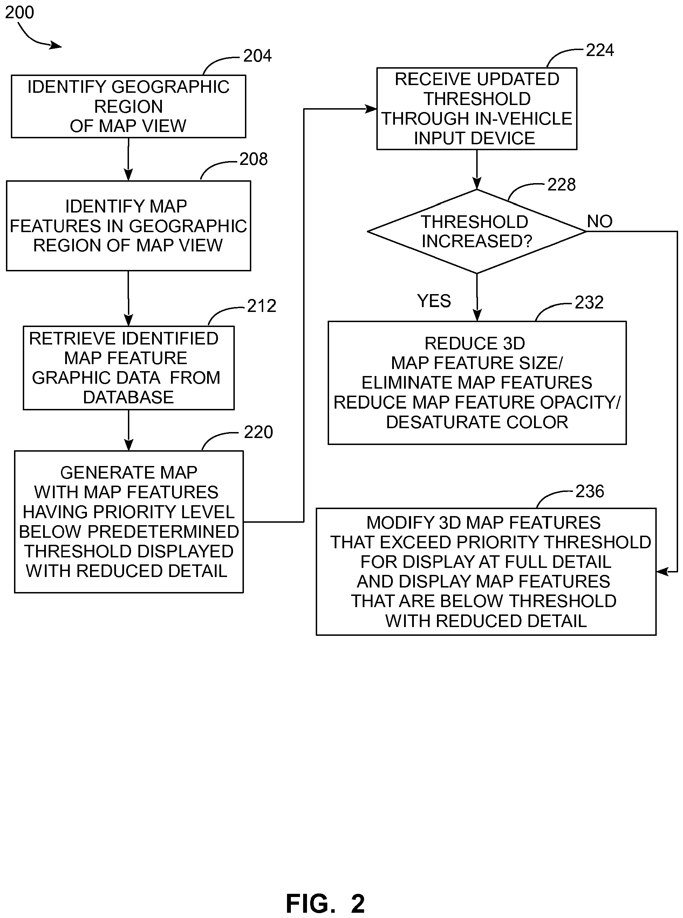

During operation, the in-vehicle information system 104 displays maps, including map features, using the display device 132. In the embodiment of FIG. 1, the maps and map features are displayed in a 3D virtual environment. Occupants in the vehicle provide input to the in-vehicle information system to adjust the level of detail depicted in the mapping application, and the in-vehicle information system 104 modifies the display of map features based on the priority of the map features and a selected priority level threshold. FIG. 2 depicts a block diagram of a process 200 for displaying the map features. In the description below, a reference to the process 200 performing or doing some function or action refers to one or more controllers or processors that are configured with programmed instructions, which are executed by the controllers or processors to implement the process performing the function or action or operating one or more components to perform the function or action. The process 200 is described with reference to the navigation system 100 of FIG. 1 for illustrative purposes.

Process 200 begins with identification of a geographic region for display in a map (block 204). In one configuration, the geographic region is a region of a selected size that surrounds the vehicle. The in-vehicle information system 104 identifies geographic coordinates for the vehicle using the global positioning system 128 and identifies a geographic region around the vehicle to display with the map. In another embodiment, an occupant in the vehicle selects the geographic region using, for example, gesture inputs to a touchscreen display device in the vehicle, or navigation software that locates a destination for display in the map. The vehicle occupant can select a geographic region that includes the vehicle or a geographic region that is remote from the vehicle. In one embodiment the geographic region has a predetermined size, and in another embodiment an occupant of the vehicle adjusts a level of zoom to select the size of the identified geographic region in the map display.

Process 200 continues as the in-vehicle information system 104 identifies map features in the identified geographic region of the map view (block 208). In the embodiment of FIG. 1, the remote map feature database 160 or the map feature cache 118 include geographic coordinates 176 for each of the map features. In another embodiment of the system 100, the data in the map feature database 160 are stored in the memory 116 or in another digital data storage device that is integrated with the in-vehicle information system 104, such as magnetic, optical, or solid-state memory devices. The processor 108 or a processor in the remote map feature database 160 performs a search for all map features that are within the predetermined geographic region of the map view. The in-vehicle information system 104 receives the feature identifier 168 for each of the map features. In some embodiments, the in-vehicle information system 104 identifies map features that are located within a predetermined distance outside of the geographic region of the map view to display map features in an efficient manner if the map view moves to a nearby geographic region.

During process 200, the in-vehicle information system retrieves graphical data corresponding to the identified map features (block 212). In the embodiment of FIG. 1, the in-vehicle information system 104 generates one or more network requests to retrieve the map feature data for the identified map features from the map feature database 160. The processor 108 receives the map feature data through the data network 150 using the network interface device 124. In another configuration, the map feature database is either stored in the memory 116 in the in-vehicle information system 104, or the data for the identified map features are stored in the map feature cache 118. In another embodiment of the system 100, the data in the map feature database 160 are stored in a removable digital data storage device that is integrated with the in-vehicle information system 104, such as magnetic, optical, or solid-state memory devices. The map feature data include the feature graphics data 180, in addition to the feature identifier 168, the feature priority data 172, and feature geographic coordinates 176. In a 3D graphics embodiment, the feature graphics data 180 include data corresponding to 3D polygonal models and textures that provide photo-realistic or artistically stylized depictions of the map feature. In other embodiments, the graphics data include a 2D picture or graphical icon corresponding to the map feature. According to the invention, at least one map feature can be depicted using both 2D and 3D graphical representations based on the priority of the feature and the selected priority level threshold for display of the map.

Process 200 continues as the in-vehicle information system 104 displays the map of the identified geographic region with the map features having an identified priority that is below a selected priority level threshold being displayed with a reduced level of detail (block 220). The processor 108 in the in-vehicle information system 104 is configured to reduce the detail of the graphical display of a map feature in one or more ways including reducing the size of the map feature, reducing an opacity of the map feature, desaturating colors in the map feature, or completely removing the map feature from the display of the virtual environment. In the in-vehicle information system 104, the CPU 110 and GPU 112 in the processor 108 process the map feature data to generate a 3D virtual environment corresponding to the identified geographic region for display in the map. For 3D map features, the processor 108 generates either a three-dimensional model for the map feature or a two-dimensional graphic for the map feature. As described above, the feature graphics data 180 for some map features include 3D models, while the feature graphics data for other map features includes only 2D graphics data. The processor 108 incorporates the 3D and 2D map feature graphics into the virtual environment where the graphics for each map feature are positioned at a location in the virtual environment that corresponds to the identified geographic coordinates for the map feature. The geographic data associated with each map feature also include orientation information, such as the direction in which a building faces or the direction of a road through the virtual environment.

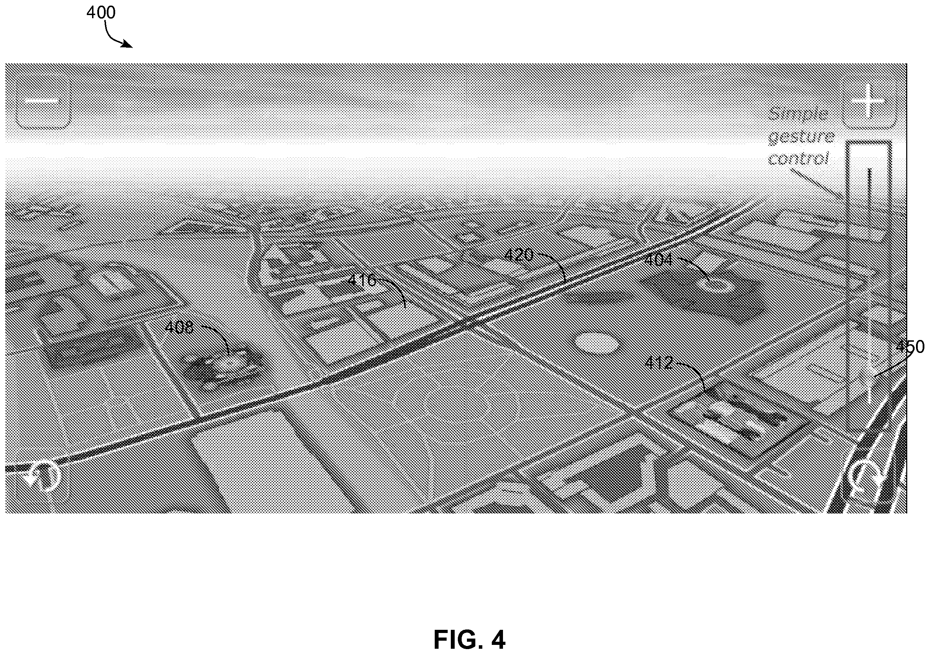

The graphics data associated with a map feature typically include a default graphical depiction of the map feature, such as a default 3D polygon model with associated textures or a default 2D graphic such as a photograph or icon. The processor 108 is configured to modify the display of the default graphical data for the map feature in response to the priority level that is associated with the map feature being above or below the priority threshold that the processor 108 uses during generation of the map display. For example, in one embodiment that is depicted in FIG. 4 - FIG. 8 below, the 3D graphical objects for different map features are distorted along a single axis corresponding to the displayed height of each map feature. If the priority of the map feature is below the priority threshold, then the map feature is converted to a 2D graphics data element and is displayed as a 2D surface. The "footprint" or dimensions of the map feature graphics as the map feature would be displayed in a 2D map remain unchanged, however. The height of the map features increases up to a default maximum height for the graphics data if the priority threshold is reduced below the priority level associated with the map feature. In one alternative example not falling under the scope of the present invention, the map features that are associated with a priority level that is below the predetermined threshold are removed from the map display entirely. In another alternative example not falling under the scope of the present invention, the processor 108 adjusts the size of the 3D models with associated priorities that are below the predetermined threshold to a predetermined minimum size while continuing to display the 3D models for the map features. In another alternative example not falling under the scope of the present invention, the processor 108 adjusts the opacity of the 3D models of map features with priority levels that are below the predetermined threshold to generate the map view with terrain features and higher-priority map features being at least partially visible through the lower-priority map feature models. In another alternative example not falling under the scope of the present invention, the processor 108 desaturates colors in a 3D model or 2D graphic if the corresponding map feature has an associated priority that is below the predetermined threshold. Map features that are above the priority threshold appear in color, and map features with associated priority levels below the predetermined threshold are depicted in monochrome or with a reduced color contrast to enable efficient viewing of the high-priority map features by the vehicle occupant.

Process 200 continues as the in-vehicle information system receives input from an occupant in the vehicle to adjust the priority threshold for the display of map features (block 224). In the in-vehicle information system 104, the occupants of the vehicle adjust the priority threshold using the input devices 136. In one embodiment, the input device is a touchscreen display with a slider or other graphical control display. The vehicle occupants touch the touchscreen display and provide an input gesture, such as sliding finger across a touchscreen or moving a hand in a predetermined gesture to manipulate the slider control, for adjustment of the priority threshold. In some embodiments, the graphical control is labeled as a "level of detail" adjustment, where an increase in the level of detail corresponds to a decrease in the priority threshold since a map with a higher level of detail depicts additional map features with lower priority values in additional detail, and vice-versa. In another embodiment, the input devices 136 receive one or more voice commands such as "increase detail," "decrease detail," "show me more," "show me less," and similar voice commands. The processor 108 adjusts the priority threshold in response to the input from the vehicle occupant using any of the input devices 136 and stores the adjusted priority threshold data 122 in the memory 116.

When the priority threshold level changes during process 200, the in-vehicle information system 104 generates an updated view of the identified geographic region with modifications made to the depiction of the map features. If the priority threshold increases (block 228), then the processor 108 re-generates the graphical display with modifications to the map features to reduce size of the 3D map features, including reducing the height of 3D map features or changing the map features to 2D graphics, eliminating map features from the display, reducing the opacity of the map features, and desaturating color from the map features (block 232). If the priority threshold decreases (block 228), then the processor 108 generates an animation in the graphical display to transform the graphics for map features that are above the priority threshold to be displayed with full detail, while map features that are below the priority threshold level are displayed with reduced detail (block 236). As described above, the processor 108 modifies the display of each of the map feature in response to the priority level associated with the map feature and the adjusted priority threshold. Some map features may be displayed in the same manner after the priority threshold is adjusted, while other map features are displayed with greater detail or lesser detail in response to a decrease or increase, respectively, in the priority threshold.

FIG. 4 - FIG. 8 depict a graphical display of a map depicting a single geographic region that includes a plurality of map features. FIG. 4 - FIG. 8 depict illustrative outputs of the map displays described in the process 200 above as an occupant in a vehicle adjusts the priority threshold for the display of map features. In FIG. 4 - FIG. 8, the illustrative map features 404, 408, 412, and 416 include 3D graphics data, while other map features such as the road 420 include 2D graphics data. For map features with 3D graphics data, the processor 108 generates a 3D graphical model for the map feature if the priority associated with the 3D map feature exceeds the predetermined threshold, and the processor 108 modifies the 3D graphical model with reference to the degree to which the priority of the map feature exceeds the priority threshold. Additionally, 2D map features include roads, such as the road 420 in FIG. 4 - FIG. 8, which are mapped to the underlying terrain. The underlying terrain can be displayed in a 3D format to exemplify terrain features, such as hills and valleys, or the underlying terrain can be displayed in a 2D format to simplify the display of the virtual environment.

FIG. 4 depicts an on-screen gesture control interface slider 450 that selects a priority threshold for display of map features. In FIG. 4, the control 450 is set to a minimum detail setting, which corresponds to a maximum priority threshold value. In FIG. 4, the priority levels for each of the 3D map features, including illustrative map features 404, 408, 412, and 416, are each below the predetermined threshold. Thus, in FIG. 4, the map display 400 includes only a 2D graphical representation for the 3D map features 404 - 416. In the illustrative embodiment of FIG. 4, the 3D map features with priority values below the priority threshold are displayed with a 2D representation that maintains the east-west and north-south dimensions of the map features as the features would be depicted on a 2D map. The processor 108 modifies the "z-axis" or the height of the 3D map feature above the surrounding terrain based on the priority level of the model and the priority threshold. In the in-vehicle information system 104, the processor 108 is configured to perform different transformations to the 3D graphics data for map features, including transformations that preserve the aspect ratios of the 3D model in all three dimensions and transformations that modify the 3D model along one axis, such as the z-axis, differently than the other axes in the virtual environment. The low level of detail in the display 400 enables the occupants in the vehicle to view roads and basic terrain features with minimal additional graphics for a simplified view of the virtual environment corresponding to a real-world environment. In particular, the display 400 depicts roads, such as the road 420, without obstruction from 3D models corresponding to the other map features in the virtual environment.

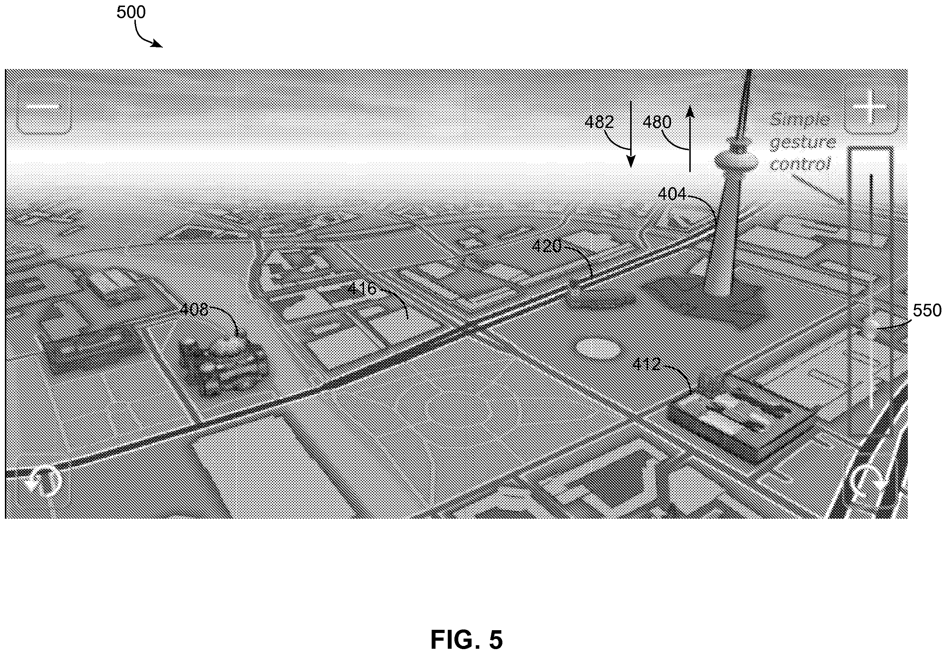

FIG. 5 - FIG. 8 depict 3D displays of the same geographic region that is depicted in FIG. 4 with the priority threshold set to different levels and images that are depicted during intermediate animation sequences between different priority level displays. In FIG. 5, an operator provides an input, such as a sliding gesture, to move the slider input 550 upward from the position depicted in FIG. 4. In FIG. 5, a display 500 is generated with the priority threshold input control 550 set to a higher level of detail, which corresponds to a lower priority threshold value. The processor 108 generates an animation sequence in which map features 404, 408, and 412 that are above the priority threshold extend from the 2D map to be displayed as three-dimensional graphical models. For example, FIG. 5 depicts the map features 404, 408, and 412 as the processor 108 animates a gradual increase in height of the map features in direction 480 from the two-dimensional graphics depicted on the map to three-dimensional models when the operator input reduces the priority threshold. If the operator increases the priority threshold, the processor 108 generates another animation during which the visual representations of the three-dimensional map features 404, 408, and 412 gradually decrease in height in direction 482 to return to the form of two-dimensional graphics on the map surface. The display 500 includes the intermediate 3D representations of the map features 404, 408, and 412 during the animation sequence, and the processor 108 increases the z-axis dimension for each of the 3D models associated with the map features 404 - 412 to give the map features the appearance of height in the virtual environment. In FIG. 5, some of the map features with 3D graphics data remain below the priority threshold, and remain depicted as 2D graphics. For example, the map feature 416 has a lower priority than the priority threshold corresponding to the control input 550, and is depicted as a 2D graphic.

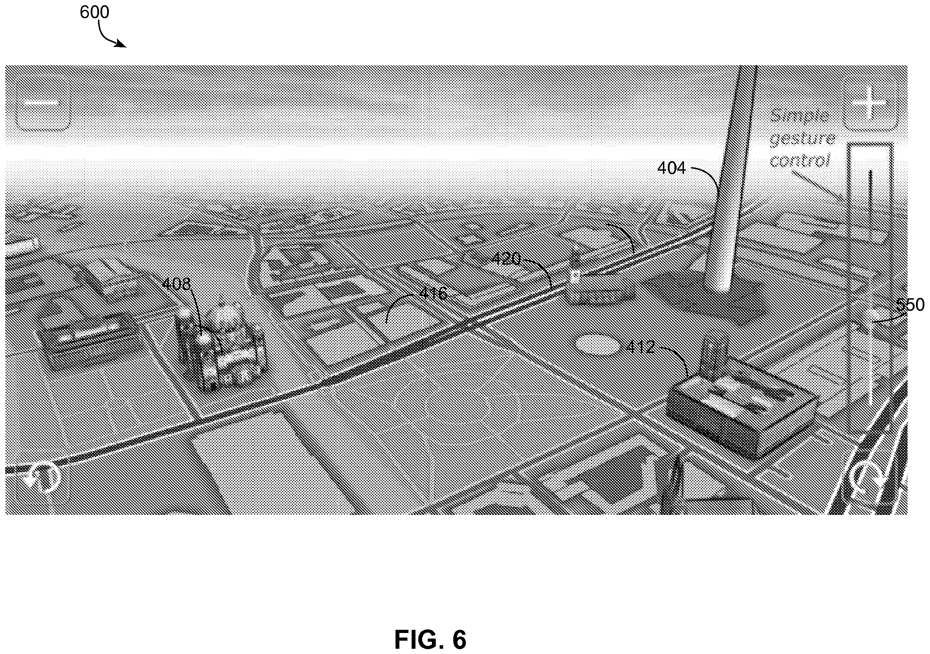

FIG. 6 depicts a display 600 that is generated after completion of the animation sequence depicted in FIG. 5 where the map features 404 - 412 are depicted as 3D graphics objects in the virtual environment. In FIG. 6, the three dimensional map features 404, 408, and 412 are depicted with a maximum height that is specified for each map feature in the map feature graphics data 180. In the case of the map feature 404, the 3D model of the map feature extends above the view of the virtual environment that the processor 108 generates in the display 600. The map feature 416 and other lower priority map features in the virtual environment that are below the predetermined threshold are depicted with 2D graphics in FIG. 6.

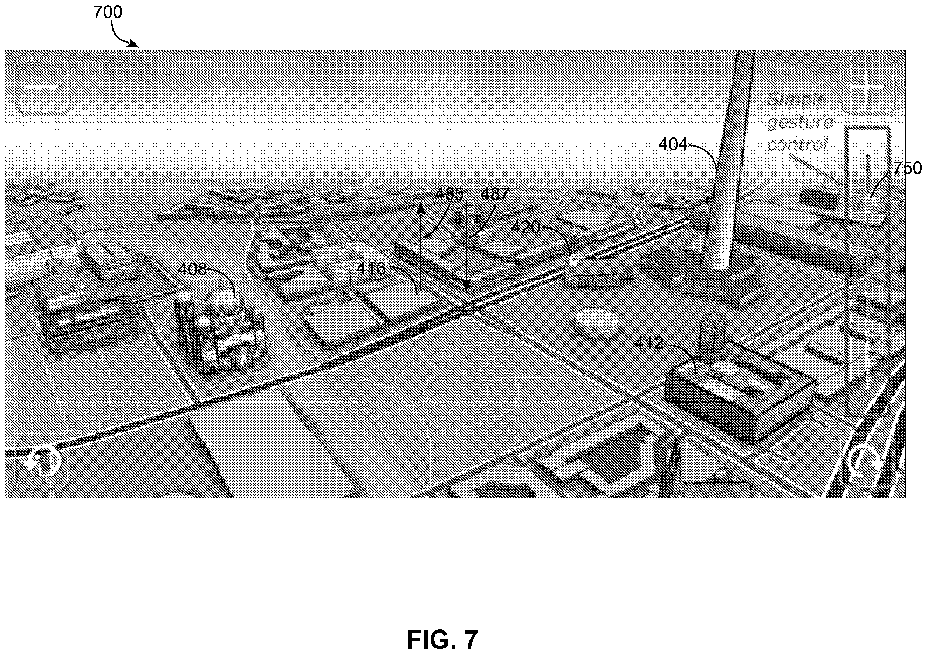

In FIG. 7, a display 700 is generated with the priority threshold input control 750 set to a higher level of detail, which corresponds to a lower priority threshold value than the threshold depicted in FIG. 6. In FIG. 7, the priority threshold level is lower than the priority levels associated with some of the lower-priority map features, including the map feature 416. FIG. 7 depicts the display 700 during a second animation where the processor 108 generates a sequence of graphical depictions of the virtual environment as the lower priority map features, such as the map feature 416, increase in height from the ground in direction 485 to form 3D objects in response to the increased level detail selection. The processor 108 also generates an animation of the map feature 416 decreasing in height in direction 487 for display as 2D graphics in response to a decreased level of detail selection. The processor 108 increases the height of the map feature 416 during the animation sequence to display the map feature 416 as a 3D model in the virtual environment of the display 700. The higher-priority map features 404, 408, and 412 are displayed as 3D elements in the same manner as in FIG. 6.

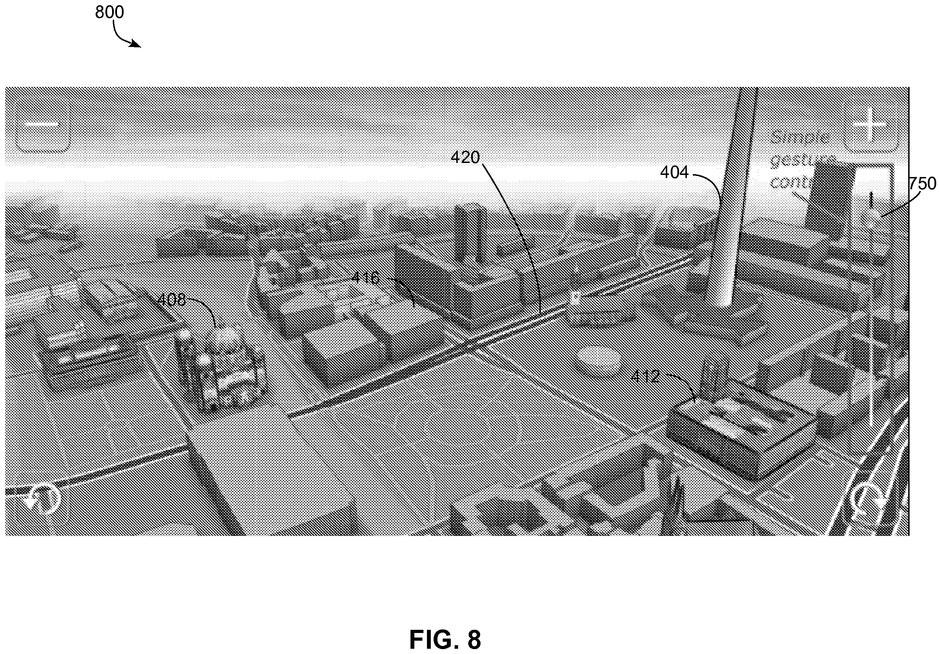

FIG. 8 depicts a display 800 that is generated after completion of the animation sequence depicted in FIG. 7 with the priority threshold input control 750 set to a maximum level of detail, which corresponds to a lowest priority threshold value for displaying map features in the virtual environment. In FIG. 8, the processor 108 displays the lower-priority map features, including the map feature 416, at a full height specified for the map feature in the graphics data 180 associated with each map feature. The higher-priority map features 404, 408, and 412 are displayed as 3D elements in the same manner as in FIG. 6 and FIG. 7. The full-detail display depicted in FIG. 8 enables occupants in the vehicle to view a more detailed model of the virtual environment that corresponds to a region of interest in the real world.

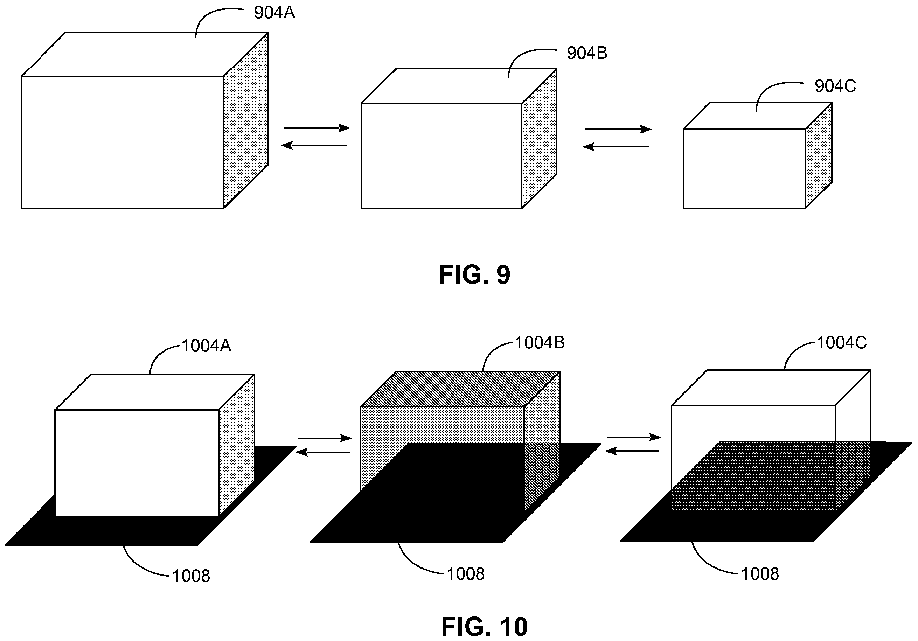

While FIG. 4 - FIG. 8 depict an animated modification of map features with a modification of the height of 3D graphical map features and flattening into 2D graphic of at least one 3D graphical map feature having an associated priority level below the predetermined threshold, alternative embodiments apply different modifications to other map features. For example, FIG. 9 depicts modification to the size of a map feature 904A with two smaller sizes 904B and 904C depicted for the map feature. In FIG. 9, the modification to the map feature depicted in the graphics 904A - 904C includes adjusting the size of the map feature in the x, y, and z axes to preserve the relative aspect ratio of the 3D graphical map feature. The system 100 is configured to animate the transition between different sizes for the map features to provide an intuitive interface user interface for increasing and decreasing the level of detail for map features. In one embodiment, selected map features such as trees or foliage in a rural geographic region are displayed as small three-dimensional graphics models similar to the object 904C when the operator selects a high-priority threshold with a reduced level of detail. The processor 108 generates an animation of the three dimensional models increasing to a larger size similar to the object 904A when the operator enters an input corresponding to a higher level of detail.

In FIG. 10, the map feature 1004A is depicted with full opacity, which is to say that the 3D map feature 1004A fully occludes a region of a ground plane 1008 in a region behind the 3D map feature 1004A. The processor 108 reduces the opacity of the map feature to generate map feature graphics 1004B and 1004C in FIG. 10. In one embodiment, the opacity is increased or decreased gradually to provide a "fade in" and "fade out" graphical display of the map feature to the operator. As the opacity is reduced, the region of the ground plane 1008 behind the map feature graphics becomes more visible, and the corresponding visibility of the map features 1004B and 1004C is reduced.

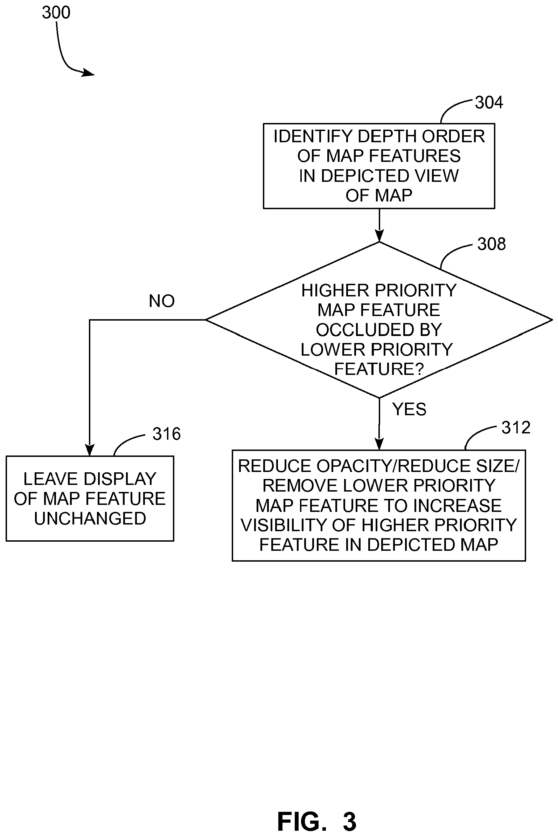

FIG. 3 depicts a process 300 for selectively modifying the graphical depiction of a map feature with a lower priority level that fully or partially occludes the view of a map feature with a higher priority level. For example, to generate a display of a 3D virtual environment, the in-vehicle information system arranges map features in a three-dimensional space and locates a viewport, which is similar in function to a camera, at coordinates in the three-dimensional virtual space to generate a view of the virtual environment. In some configurations, some 3D map features that are closer to the viewport occlude other 3D map features that are farther from the viewport in the virtual environment in a manner similar to how a nearby building or other object in the physical world occludes the view of another more remote object. The process 300 enables the in-vehicle information system 100 to modify the depiction of graphics for lower priority map features to enable display of occluded higher priority map features. In the description below, a reference to the process 300 performing or doing some function or action refers to one or more controllers or processors that are configured with programmed instructions, which are executed by the controllers or processors to implement the process performing the function or action or operating one or more components to perform the function or action. The process 300 is described with reference to the navigation system 100 of FIG. 1 for illustrative purposes. In one configuration of the navigation system 100, the in-vehicle information system 104 performs process 300 concurrently with the process 200 described above in FIG. 2.

Process 300 begins with identification of the depth order of the graphical objects corresponding to map features in the display of the virtual environment (block 304). In the in-vehicle information system 104, the GPU 112 in the processor 108 generates the 3D graphical view of the virtual environment with a depth-buffer, which is also referred to as a "z-buffer" in some GPU embodiments. The depth-buffer is used to adjust the depiction of 3D graphics objects in a scene with reference to the distance between the objects and a viewport for the scene. For example, if a virtual environment includes map features of multiple 3D building graphics arranged on a street, then the depth-buffer stores data corresponding to the distances from the 3D building objects to a viewport at an observation point in the virtual environment. In a 3D animation of a virtual environment with fixed map features, the depth-buffer changes as the location and orientation of the viewport moves through the virtual environment and the relative locations of the map features in the virtual environment change with respect to the viewport. If the graphical object corresponding to one map feature blocks the view of another map feature, then the data in the depth-buffer include only the portions of the blocking map feature graphics. The depth-buffer is commonly used to order objects in a scene of a 3D virtual environment so that the displayed scene accurately depicts perceived distances and orders of different 3D objects in the virtual environment.

During process 300, the processor 108 identifies whether the priority level associated with one map feature in the display of the virtual environment is associated with a higher priority than another map feature that is associated a lower associated priority and that occludes the view of the higher-priority map feature. The processor 108 uses the identified depth order of the map feature objects and the associated priority data for each map feature to identify occluded high-priority map features. If the view of a higher-priority map feature in the scene is occluded by the lower-priority map feature (block 308), then the processor 108 modifies the depiction of the lower-priority occluding map feature to increase the visibility of the occluded map feature. In the in-vehicle information system 104, the processor 108 reduces the opacity of the occluding map feature, reduces the size of the occluding map feature, or completely removes the occluding map feature from the display of the virtual environment (block 312). If, however, a map feature either does not occlude any other map feature or only occludes map features with a lower priority level (block 308), then the display of the map feature remains unchanged during process 300 (block 316).

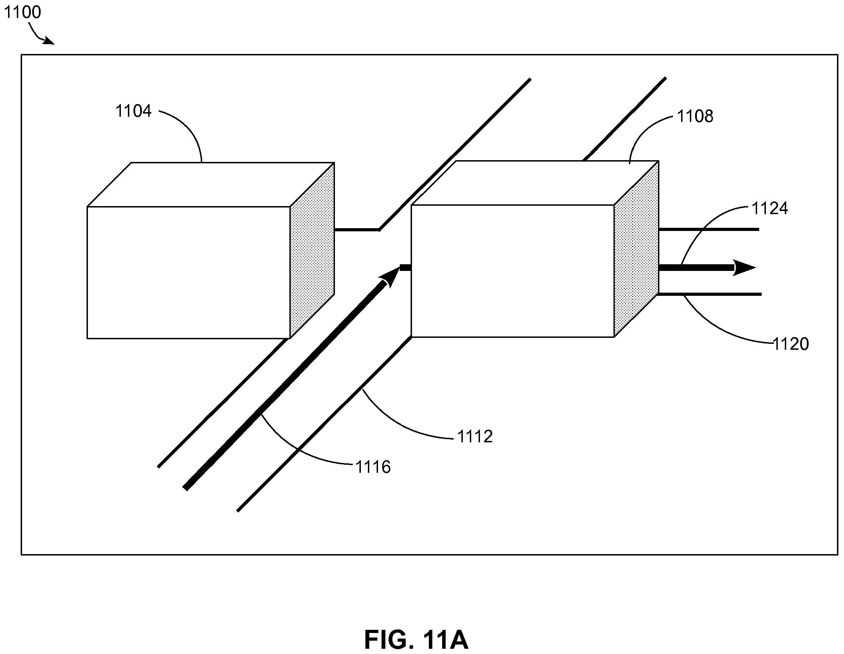

FIG. 11A depicts a display 1100 with 3D building map features 1104 and 1108, and road map features 1112 and 1116 that correspond to different portions of a navigation route 1120 and 1124, respectively. The building map features 1104 and 1108 are each assigned the same priority level. The road map features 1112 and 1120 are assigned higher priority levels because the roads are part of the navigation path depicted by the navigation indicators 1116 and 1124. The building map feature 1108 blocks a view of a portion of the road map feature 1120 and the navigation indicator 1124. In many navigation applications, a clear view of the navigation route is important, and the processor 108 identifies that the map feature 1108 is blocking the view of the map feature 1120, and that the road map feature 1120 has a higher priority than the building map feature 1108.

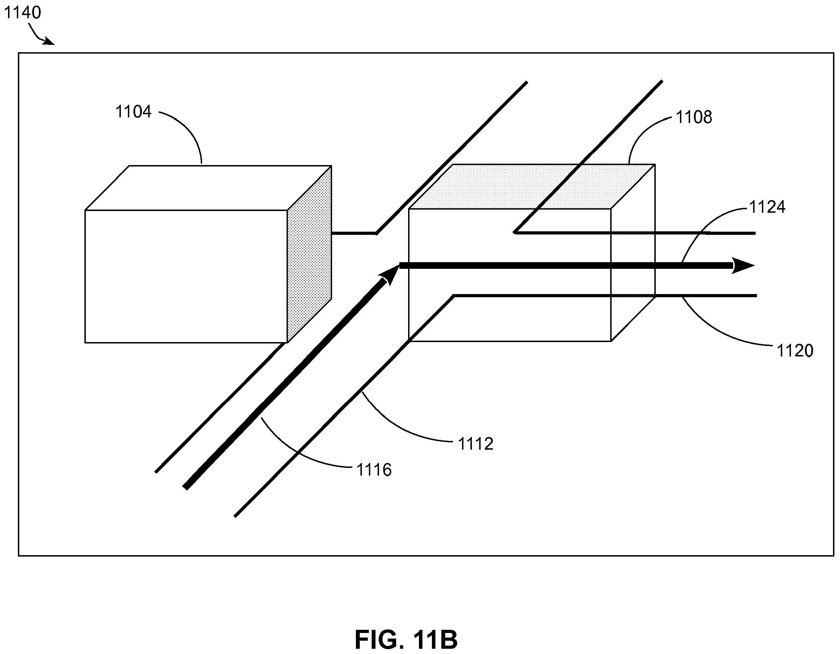

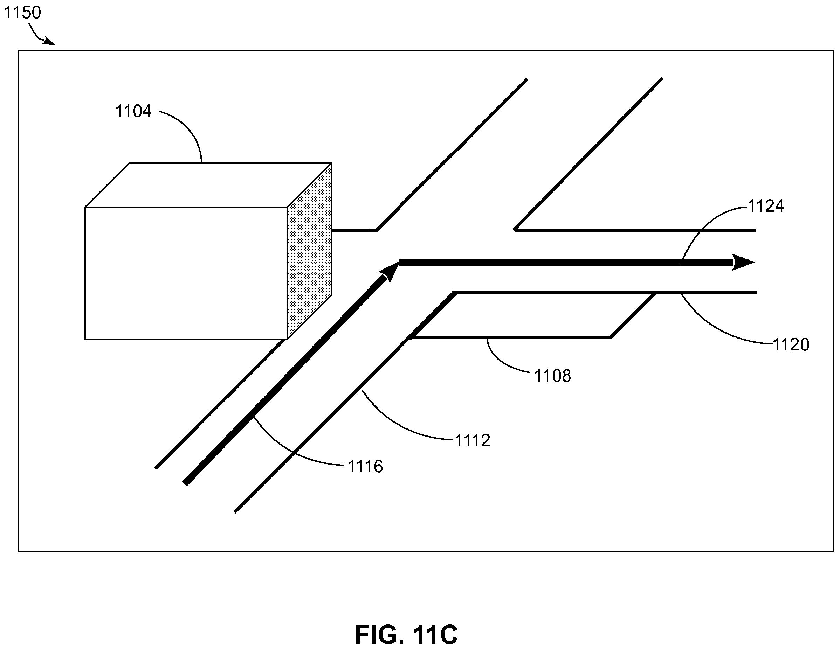

In one configuration, the processor 108 reduces the opacity of the map feature 1108 to enable a view of the higher-priority map feature 1120 during process 300. As depicted in FIG. 11B, the display 1140 depicts the building map feature 1108 with a reduced opacity and the road map feature 1120 and route indicator 1124 are visible through the building map feature 1108. In another configuration depicted in FIG. 11C, the processor 108 generates a 2D graphical depiction 1150 of the building map feature 1108 with a clear view of the road map feature 1120 and route indicator 1124. In both FIG. 11B and FIG. 11C, the processor 108 displays the building map feature 1104 in the same manner as in FIG. 11A, because the building map feature 1104 does not occlude a higher-priority map feature in the display.

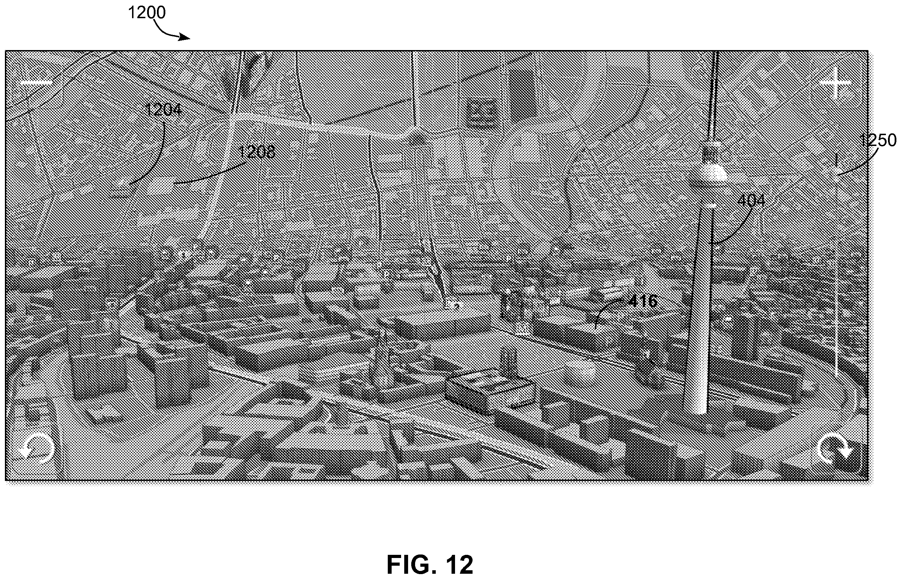

FIG. 12 depicts another display 1200 of a virtual environment in which the level of detail for map features is adjusted with reference to the distance between a virtual camera in the virtual environment and the corresponding map features. In the display 1200, the operator has entered an input to increase the level of detail controller 1250 to a maximum level of detail, with a corresponding minimum priority threshold for displaying map features including the map features 404 and 416. The map projection in FIG. 12 is curved vertically to provide a clear illustration of more distant map features, including the map features 1204 and 1208. In FIG. 12, the in-vehicle information system 104 reduces the detail for map features that are beyond a predetermined threshold distance with reference to the priority level of the map feature. For example, the map feature 1208 is beyond a predetermined threshold distance from the camera and is depicted as a 2D graphic on the map surface, even though the priority of map feature 1208 exceeds the selected priority threshold for the display 1200. The in-vehicle information system 104 continues to display the higher-priority landmark feature 1204 using a 3D model. The in-vehicle information system 104 adjusts the level of detail for map features in the virtual environment to reduce detail for selected map features based on distance to emphasize the map features that are closer to the virtual camera in the virtual environment, and to reduce visual clutter from more distant map features in the virtual environment.

## Claims

1. A method for displaying visual information in a navigation system (100) comprising:
a) identifying a geographic region for display in a map;
b) identifying a first plurality of map features that are located in the identified geographic region from a database (160) storing a plurality of map features in association with predetermined priority levels for each map feature in the plurality of map features;
c) identifying a portion of the first plurality of map features with associated priority levels that are below a first predetermined threshold;
d1) modifying graphics data associated with each map feature in the identified portion of the first plurality of map features to generate graphics data with a reduced level of detail for each map feature in the identified portion of the first plurality of map features;
d2) wherein the modifying of graphics data comprises modifying the graphics data associated with at least one map feature in the identified portion of the first plurality of map features to convert the visual depiction of the at least one map feature from a three-dimensional visual representation to a two-dimensional graphic;
e) generating a first display of the map for the geographic region with a display device (132), the first display of the map including a visual depiction for the first plurality of map features with the first display being generated using the two-dimensional graphic for said at least one map feature in the identified portion of the first plurality of map features;
the method being **characterized by**:
f) adjusting, with an input device operated by an operator, the first predetermined threshold, and when the first predetermined threshold changes, generating an updated view of the same identified geographic region with modifications made to the depiction of the map features.

2. The method of claim 1 further comprising:
identifying a second threshold in response to receiving a signal from the input device (136), the second threshold being different than the first predetermined threshold;
identifying another portion of the first plurality of map features with associated priority levels that are below the second threshold;
modifying graphics data associated with each map feature in the other portion of the first plurality of map features to generate graphics data with a reduced level of detail for each map feature in the other portion of the first plurality of map features; and
generating a second display of the map for the identified geographic region with the display device (132) in response to identifying the second threshold, the second display of the map being generated using the modified graphics data for the identified other portion of the first plurality of map features.

3. The method of claim 1, the modification of the graphics data further comprising:
generating an animation of the at least one map feature being reduced in height from the three-dimensional visual representation to the two-dimensional graphic.

4. The method of claim 1 further comprising:
generating the first display of the map as a three-dimensional representation of the identified geographic region with the display device (132);
identifying a first map feature in the first plurality of map features that occludes a view of a second map feature in the first plurality of map features in the three-dimensional representation of the geographic region; and
modifying graphics data associated with the first map feature in response to a first priority associated with the first map feature being less than a second priority associated with the second map feature.

5. The method of claim 4, the modification of the graphics data associated with the first map feature further comprising:
modifying the graphics data associated with the first map feature to decrease an opacity of the visual depiction of the first map feature to enable viewing of the occluded second map feature.

6. The method of claim 4, the modification of the graphics data associated with the first map feature further comprising:
modifying the graphics data associated with the first map feature to decrease a size of the visual depiction of the first map feature to enable viewing of the occluded second map feature.

7. The method of claim 1 further comprising:
identifying a second threshold in response to receiving a signal from the input device (136), the second threshold being different than the first predetermined threshold;
identifying the portion of the first plurality of map features with associated priority levels above the second threshold in response to the second threshold being lower than the first predetermined threshold;
modifying the graphics data associated with each map feature in the identified portion of the first plurality of map features to generate additional graphics data with an increased level of detail for each map feature in the identified portion of the first plurality of map features; and
generating a second display of the map for the identified geographic region with the display device (132) in response to identifying the second threshold, the second display of the map being generated using the additional graphics data with the increased level of detail for the identified portion of the first plurality of map features.

8. The method of claim 7, the modification of the graphics data to generate the additional graphics data with the increased level of detail further comprising:
modifying the graphics data associated with at least one map feature in the identified portion of the first plurality of map features to convert the visual depiction of the at least one map feature from a two-dimensional graphic to a three-dimensional visual representation of the map feature.

9. The method of claim 8 further comprising:
generating an animation of the at least one map feature being increased in height from the two-dimensional graphic to the three-dimensional visual representation.

10. A navigation system (100), comprising:
i) a display device (132) configured to generate a display of a map;
ii) an input device (136) configured to receive input corresponding to a selected threshold for display of map features in the map;
iii) a memory (116) configured to store a database (160) including geographic data, a plurality of map features, graphics data associated with each of the plurality of map features, and each map feature in the plurality of map features being associated with a priority level in the database (160); and
iv) a processor (108) operatively connected to the display device (136), the input device (136), and the memory (116), the processor (108) being configured to:
a) identify a geographic region for display in a map;
b) identify a first plurality of map features that are located in the identified geographic region from the database (160 ;
c) identify a portion of the first plurality of map features with associated priority levels that are below a first predetermined threshold;
d1) modify graphics data associated with each map feature in the identified portion of the first plurality of map features to generate graphics data with a reduced level of detail for each map feature in the identified portion of the first plurality of map features;
d2) wherein the modifying of graphics data comprises modifying the graphics data associated with at least one map feature in the identified portion of the first plurality of map features to convert the visual depiction of the at least one map feature from a three-dimensional visual representation to a two- dimensional graphic;
e) generate a first display of the map for the identified geographic region with the display device (132), the first display of the map including a visual depiction for the first plurality of map features with the first display being generated using the two-dimensional graphic for said at least one map feature in the identified portion of the first plurality of map features;
the navigation system being **characterized in that** the processor is further configured to:
f) adjust, with the input device operated by an operator, the first predetermined threshold, and when the first predetermined threshold changes, generating an updated view of the same identified geographic region with modifications made to the depiction of the map features.

11. The system (100) of claim 10, the processor (108) being further configured to:
identify a second threshold in response to receiving a signal from the input device (136), the second threshold being different than the first predetermined threshold;
identify another portion of the first plurality of map features with associated priority levels that are below the second threshold;
modify graphics data associated with each map feature in the other portion of the first plurality of map features to generate graphics data with a reduced level of detail for each map feature in the other portion of the first plurality of map features; and
generate a second display of the map for the identified geographic region with the display device (132) in response to identifying the second threshold, the second display of the map with the first display being generated using the modified graphics data for the identified other portion of the first plurality of map features.

12. The system (100) of claim 10, the processor (108) being further configured to:
generate an animation with the display device (132) of the at least one map feature being reduced in height from the three-dimensional visual representation to the two-dimensional graphic.

13. The system (100) of claim 10, the processor (108) being further configured to:
generate the first display of the map as a three-dimensional representation of the identified geographic region with the display device (132);
identify graphics data associated with a first map feature in the first plurality of map features that occludes a view of a second map feature in the first plurality of map features in the three-dimensional representation of the identified geographic region; and
modify the graphics data associated with the first map feature in response to a first priority associated with the first map feature being less than a second priority associated with the second map feature.

14. The system (100) of claim 13, the processor (108) being further configured to:
modify the graphics data associated with the first map feature to decrease an opacity of the visual depiction of the first map feature to enable viewing of the occluded second map feature.

15. The system (100) of claim 13, the processor (108) being further configured to:
modify the graphics data associated with the first map feature to decrease a size of the visual depiction of the first map feature to enable viewing of the occluded second map feature.

16. The system (100) of claim 10, the input device (136) further comprising:
a gesture recognition sensor (140) configured to identify a predetermined movement of an operator to select the threshold.

## Patentansprüche

1. Verfahren zum Anzeigen visueller Informationen in einem Navigationssystem (100), das Folgendes umfasst:
a) Identifizieren einer geografischen Region zur Anzeige in einer Karte;
b) Identifizieren erster mehrerer Kartenmerkmale, die sich in der identifizierten geografischen Region befinden, aus einer Datenbank (160), in der mehrere Kartenmerkmale in Assoziation mit vorbestimmten Prioritätsstufen für jedes Kartenmerkmal in den mehreren Kartenmerkmalen gespeichert sind;
c) Identifizieren eines Teils der ersten mehreren Kartenmerkmale mit assoziierten Prioritätsstufen, die unter einer ersten vorbestimmten Schwelle liegen;
d1) Modifizieren von mit jedem Kartenmerkmal in dem identifizierten Teil der ersten mehreren Kartenmerkmale assoziierten Grafikdaten, um Grafikdaten mit einer reduzierten Detailgenauigkeit für jedes Kartenmerkmal in dem identifizierten Teil der ersten mehreren Kartenmerkmale zu erzeugen;
d2) wobei das Modifizieren von Grafikdaten Modifizieren der mit mindestens einem Kartenmerkmal in dem identifizierten Teil der ersten mehreren Kartenmerkmale assoziierten Grafikdaten, um die visuelle Darstellung des mindestens einen Kartenmerkmals von einer dreidimensionalen visuellen Repräsentation in eine zweidimensionale Grafik umzuwandeln, umfasst;
e) Erzeugen einer ersten Anzeige der Karte für die geografische Region mit einer Anzeigevorrichtung (132), wobei die erste Anzeige der Karte eine visuelle Darstellung für die ersten mehreren Kartenmerkmale enthält, wobei die erste Anzeige unter Verwendung der zweidimensionalen Grafik für das mindestens eine Kartenmerkmal in dem identifizierten Teil der ersten mehreren Kartenmerkmale erzeugt wird;
wobei das Verfahren **gekennzeichnet ist durch**:
f) Anpassen, mit einer **durch** einen Bediener betätigten Eingabevorrichtung, der ersten vorbestimmten Schwelle, und wenn sich die erste vorbestimmte Schwelle ändert, Erzeugen einer aktualisierten Ansicht der gleichen identifizierten geografischen Region mit an der Darstellung der Kartenmerkmale vorgenommenen Modifikationen.

2. Verfahren nach Anspruch 1, das ferner Folgendes umfasst:
Identifizieren einer zweiten Schwelle als Reaktion auf einen Empfang eines Signals von der Eingabevorrichtung (136), wobei sich die zweite Schwelle von der ersten vorbestimmten Schwelle unterscheidet;
Identifizieren eines anderen Teils der ersten mehreren Kartenmerkmale mit assoziierten Prioritätsstufen, die unter der zweiten Schwelle liegen;
Modifizieren von mit jedem Kartenmerkmal in dem anderen Teil der ersten mehreren Kartenmerkmale assoziierten Grafikdaten, um Grafikdaten mit einer reduzierten Detailgenauigkeit für jedes Kartenmerkmal in dem anderen Teil der ersten mehreren Kartenmerkmale zu erzeugen; und
Erzeugen einer zweiten Anzeige der Karte für die identifizierte geografische Region mit der Anzeigevorrichtung (132) als Reaktion auf ein Identifizieren der zweiten Schwelle, wobei die zweite Anzeige der Karte unter Verwendung der modifizierten Grafikdaten für den identifizierten anderen Teil der ersten mehreren Kartenmerkmale erzeugt wird.

3. Verfahren nach Anspruch 1, wobei die Modifikation der Grafikdaten ferner Folgendes umfasst:
Erzeugen einer Animation der Verringerung der Höhe des mindestens einen Kartenmerkmals von der dreidimensionalen visuellen Repräsentation zu der zweidimensionalen Grafik.

4. Verfahren nach Anspruch 1, das ferner Folgendes umfasst:
Erzeugen der ersten Anzeige der Karte als eine dreidimensionale Repräsentation der identifizierten geografischen Region mit der Anzeigevorrichtung (132);
Identifizieren eines ersten Kartenmerkmals in den ersten mehreren Kartenmerkmalen, das eine Ansicht eines zweiten Kartenmerkmals in den ersten mehreren Kartenmerkmalen in der dreidimensionalen Repräsentation der geografischen Region verdeckt; und
Modifizieren von mit dem ersten Kartenmerkmal assoziierten Grafikdaten als Reaktion darauf, dass eine mit dem ersten Kartenmerkmal assoziierte erste Priorität geringer als eine mit dem zweiten Kartenmerkmal assoziierte zweite Priorität ist.

5. Verfahren nach Anspruch 4, wobei die Modifikation der mit dem ersten Kartenmerkmal assoziierten Grafikdaten ferner Folgendes umfasst:
Modifizieren der mit dem ersten Kartenmerkmal assoziierten Grafikdaten, um eine Undurchsichtigkeit der visuellen Darstellung des ersten Kartenmerkmals zu verringern, um eine Ansicht des verdeckten zweiten Kartenmerkmals zu ermöglichen.

6. Verfahren nach Anspruch 4, wobei die Modifikation der mit dem ersten Kartenmerkmal assoziierten Grafikdaten ferner Folgendes umfasst:
Modifizieren der mit dem ersten Kartenmerkmal assoziierten Grafikdaten, um eine Größe der visuellen Darstellung des ersten Kartenmerkmals zu verringern, um eine Ansicht des verdeckten zweiten Kartenmerkmals zu ermöglichen.

7. Verfahren nach Anspruch 1, das ferner Folgendes umfasst:
Identifizieren einer zweiten Schwelle als Reaktion auf einen Empfang eines Signals von der Eingabevorrichtung (136), wobei sich die zweite Schwelle von der ersten vorbestimmten Schwelle unterscheidet;
Identifizieren des Teils der ersten mehreren Kartenmerkmale mit assoziierten Prioritätsstufen über der zweiten Schwelle als Reaktion darauf, dass die zweite Schwelle niedriger als die vorbestimmte erste Schwelle ist;
Modifizieren der mit jedem Kartenmerkmal in dem identifizierten Teil der ersten mehreren Kartenmerkmale assoziierten Grafikdaten, um zusätzliche Grafikdaten mit einer erhöhten Detailgenauigkeit für jedes Kartenmerkmal in dem identifizierten Teil der ersten mehreren Kartenmerkmale zu erzeugen; und
Erzeugen einer zweiten Anzeige der Karte für die identifizierte geografische Region mit der Anzeigevorrichtung (132) als Reaktion auf ein Identifizieren der zweiten Schwelle, wobei die zweite Anzeige der Karte unter Verwendung der zusätzlichen Grafikdaten mit der erhöhten Detailgenauigkeit für den identifizierten Teil der ersten mehreren Kartenmerkmale erzeugt wird.

8. Verfahren nach Anspruch 7, wobei die Modifikation der Grafikdaten, um zusätzliche Grafikdaten mit der erhöhten Detailgenauigkeit zu erzeugen, ferner Folgendes umfasst:
Modifizieren der mit mindestens einem Kartenmerkmal in dem identifizierten Teil der ersten mehreren Kartenmerkmale assoziierten Grafikdaten, um die visuelle Darstellung des mindestens einen Kartenmerkmals von einer zweidimensionalen Grafik in eine dreidimensionale visuelle Repräsentation des Kartenmerkmals umzuwandeln.

9. Verfahren nach Anspruch 8, das ferner Folgendes umfasst:
Erzeugen einer Animation der Vergrößerung der Höhe des mindestens einen Kartenmerkmals von der zweidimensionalen Grafik zu der dreidimensionalen visuellen Repräsentation.

10. Navigationssystem (100), das Folgendes umfasst:
i) eine Anzeigevorrichtung (132), ausgelegt zum Erzeugen einer Anzeige einer Karte;
ii) eine Eingabevorrichtung (136), ausgelegt zum Empfangen einer Eingabe, die einer ausgewählten Schwelle für die Anzeige von Kartenmerkmalen in der Karte entspricht;
iii) einen Speicher (116), ausgelegt zum Speichern einer Datenbank (160), die geografische Daten, mehrere Kartenmerkmale, mit jedem der mehreren Kartenmerkmale assoziierte Grafikdaten enthält, und wobei jedes Kartenmerkmal in den mehreren Kartenmerkmalen mit einer Prioritätsstufe in der Datenbank (160) assoziiert ist; und
iv) einen Prozessor (108), der mit der Anzeigevorrichtung (136), der Eingabevorrichtung (136) und dem Speicher (116) betriebsverbunden ist, wobei der Prozessor (108) ausgelegt ist zum:
a) Identifizieren einer geografischen Region zur Anzeige in einer Karte;
b) Identifizieren erster mehrerer Kartenmerkmale, die sich in der identifizierten geografischen Region befinden, aus der Datenbank (160);
c) Identifizieren eines Teils der ersten mehreren Kartenmerkmale mit assoziierten Prioritätsstufen, die unter einer ersten vorbestimmten Schwelle liegen;
d1) Modifizieren von mit jedem Kartenmerkmal in dem identifizierten Teil der ersten mehreren Kartenmerkmale assoziierten Grafikdaten, um Grafikdaten mit einer reduzierten Detailgenauigkeit für jedes Kartenmerkmal in dem identifizierten Teil der ersten mehreren Kartenmerkmale zu erzeugen;
d2) wobei das Modifizieren von Grafikdaten Modifizieren der mit mindestens einem Kartenmerkmal in dem identifizierten Teil der ersten mehreren Kartenmerkmale assoziierten Grafikdaten, um die visuelle Darstellung des mindestens einen Kartenmerkmals von einer dreidimensionalen visuellen Repräsentation in eine zweidimensionale Grafik umzuwandeln, umfasst;
e) Erzeugen einer ersten Anzeige der Karte für die identifizierte geografische Region mit einer Anzeigevorrichtung (132), wobei die erste Anzeige der Karte eine visuelle Darstellung für die ersten mehreren Kartenmerkmale enthält, wobei die erste Anzeige unter Verwendung der zweidimensionalen Grafik für das mindestens eine Kartenmerkmal in dem identifizierten Teil der ersten mehreren Kartenmerkmale erzeugt wird;
wobei das Navigationssystem **dadurch gekennzeichnet ist, dass** der Prozessor ferner ausgelegt ist zum:
f) Anpassen, mit der durch einen Bediener betätigten Eingabevorrichtung, der ersten vorbestimmten Schwelle, und wenn sich die erste vorbestimmte Schwelle ändert, Erzeugen einer aktualisierten Ansicht der gleichen identifizierten geografischen Region mit an der Darstellung der Kartenmerkmale vorgenommenen Modifikationen.

11. System (100) nach Anspruch 10, wobei der Prozessor (108) ferner ausgelegt ist zum:
Identifizieren einer zweiten Schwelle als Reaktion auf einen Empfang eines Signals von der Eingabevorrichtung (136), wobei sich die zweite Schwelle von der ersten vorbestimmten Schwelle unterscheidet;
Identifizieren eines anderen Teils der ersten mehreren Kartenmerkmale mit assoziierten Prioritätsstufen, die unter der zweiten Schwelle liegen;
Modifizieren von mit jedem Kartenmerkmal in dem anderen Teil der ersten mehreren Kartenmerkmale assoziierten Grafikdaten, um Grafikdaten mit einer reduzierten Detailgenauigkeit für jedes Kartenmerkmal in dem anderen Teil der ersten mehreren Kartenmerkmale zu erzeugen; und
Erzeugen einer zweiten Anzeige der Karte für die identifizierte geografische Region mit der Anzeigevorrichtung (132) als Reaktion auf ein Identifizieren der zweiten Schwelle, wobei die zweite Anzeige der Karte mit der ersten Anzeige unter Verwendung der modifizierten Grafikdaten für den identifizierten anderen Teil der ersten mehreren Kartenmerkmale erzeugt wird.

12. System (100) nach Anspruch 10, wobei der Prozessor (108) ferner ausgelegt ist zum:
Erzeugen einer Animation mit der Anzeigevorrichtung (132) der Verringerung der Höhe des mindestens einen Kartenmerkmals von der dreidimensionalen visuellen Repräsentation zu der zweidimensionalen Grafik.

13. System (100) nach Anspruch 10, wobei der Prozessor (108) ferner ausgelegt ist zum:
Erzeugen der ersten Anzeige der Karte als eine dreidimensionale Repräsentation der identifizierten geografischen Region mit der Anzeigevorrichtung (132);
Identifizieren von Grafikdaten, die assoziiert sind mit einem ersten Kartenmerkmal in den ersten mehreren Kartenmerkmalen, das eine Ansicht eines zweiten Kartenmerkmals in den ersten mehreren Kartenmerkmalen in der dreidimensionalen Repräsentation der identifizierten geografischen Region verdeckt; und
Modifizieren der mit dem ersten Kartenmerkmal assoziierten Grafikdaten als Reaktion darauf, dass eine mit dem ersten Kartenmerkmal assoziierte erste Priorität geringer als eine mit dem zweiten Kartenmerkmal assoziierte zweite Priorität ist.

14. System (100) nach Anspruch 13, wobei der Prozessor (108) ferner ausgelegt ist zum:
Modifizieren der mit dem ersten Kartenmerkmal assoziierten Grafikdaten, um eine Undurchsichtigkeit der visuellen Darstellung des ersten Kartenmerkmals zu verringern, um eine Ansicht des verdeckten zweiten Kartenmerkmals zu ermöglichen.

15. System (100) nach Anspruch 13, wobei der Prozessor (108) ferner ausgelegt ist zum:
Modifizieren der mit dem ersten Kartenmerkmal assoziierten Grafikdaten, um eine Größe der visuellen Darstellung des ersten Kartenmerkmals zu verringern, um eine Ansicht des verdeckten zweiten Kartenmerkmals zu ermöglichen.

16. System (100) nach Anspruch 10, wobei die Eingabevorrichtung (136) ferner Folgendes umfasst:
einen Gestenerkennungssensor (140), ausgelegt zum Identifizieren einer vorbestimmten Bewegung eines Bedieners zum Auswählen der Schwelle.

## Revendications

1. Procédé pour afficher des informations visuelles dans un système de navigation (100) comprenant les étapes suivantes :
a) identifier une région géographique à afficher sur une carte ;
b) identifier une première pluralité d'éléments cartographiques qui sont situés dans la région géographique identifiée à partir d'une base de données (160) stockant une pluralité d'éléments cartographiques en association avec des niveaux de priorité prédéterminés pour chaque élément cartographique dans la pluralité d'éléments cartographiques ;
c) identifier une partie de la première pluralité d'éléments cartographiques avec des niveaux de priorité associés qui sont en dessous d'un premier seuil prédéterminé ;
d1) modifier les données graphiques associées à chaque élément cartographique dans la partie identifiée de la première pluralité d'éléments cartographiques pour générer des données graphiques avec un niveau de détail réduit pour chaque élément cartographique dans la partie identifiée de la première pluralité d'éléments cartographiques ;
d2) où la modification des données graphiques comprend de modifier les données graphiques associées à au moins un élément cartographique dans la partie identifiée de la première pluralité d'éléments cartographiques pour faire passer la représentation visuelle de l'au moins un élément cartographique d'une représentation visuelle tridimensionnelle à une représentation graphique bidimensionnelle ;
e) générer un premier affichage de la carte pour la région géographique avec un dispositif d'affichage (132), le premier affichage de la carte comprenant une représentation visuelle pour la première pluralité d'éléments cartographiques, avec le premier affichage étant généré en utilisant le graphique bidimensionnel pour ledit au moins un élément cartographique dans la partie identifiée de la première pluralité d'éléments cartographiques ;
le procédé étant **caractérisé par** les étapes suivantes :
f) ajuster, avec un dispositif d'entrée actionné par un opérateur, le premier seuil prédéterminé et, lorsque le premier seuil prédéterminé change, générer une vue actualisée de la même région géographique identifiée avec des modifications apportées à la représentation des éléments cartographiques.

2. Procédé selon la revendication 1, comprenant en outre les étapes suivantes :
identifier un deuxième seuil en réponse à la réception d'un signal provenant du dispositif d'entrée (136), le deuxième seuil étant différent du premier seuil prédéterminé ;
identifier une autre partie de la première pluralité d'éléments cartographiques avec des niveaux de priorité associés qui sont inférieurs au deuxième seuil ;
modifier les données graphiques associées à chaque élément cartographique dans l'autre partie de la première pluralité d'éléments cartographiques afin de générer des données graphiques avec un niveau de détail réduit pour chaque élément cartographique dans l'autre partie de la première pluralité d'éléments cartographiques ; et
générer un deuxième affichage de la carte pour la région géographique identifiée avec le dispositif d'affichage (132) en réponse à l'identification du deuxième seuil, le deuxième affichage de la carte étant généré en utilisant les données graphiques modifiées pour l'autre partie identifiée de la première pluralité d'éléments cartographiques.

3. Procédé selon la revendication 1, la modification des données graphiques comprenant en outre l'étape suivante :
générer une animation de l'au moins un élément cartographique dont la hauteur est réduite de la représentation visuelle tridimensionnelle au graphique bidimensionnel.

4. Procédé selon la revendication 1 comprenant en outre les étapes suivantes :
générer le premier affichage de la carte sous la forme d'une représentation tridimensionnelle de la région géographique identifiée à l'aide du dispositif d'affichage (132) ;
identifier un premier élément cartographique dans la première pluralité d'éléments cartographiques qui occulte une vue d'un deuxième élément cartographique dans la première pluralité d'éléments cartographiques dans la représentation tridimensionnelle de la région géographique ; et
modifier les données graphiques associées au premier élément cartographique en réponse à une première priorité associée au premier élément cartographique qui est inférieure à une deuxième priorité associée au deuxième élément cartographique.

5. Procédé selon la revendication 4, la modification des données graphiques associées au premier élément cartographique comprenant en outre l'étape suivante :
modifier les données graphiques associées au premier élément cartographique afin de réduire l'opacité de la représentation visuelle du premier élément cartographique pour permettre la visualisation du deuxième élément cartographique qui est occulté.

6. Procédé selon la revendication 4, la modification des données graphiques associées au premier élément cartographique comprenant en outre l'étape suivante :
modifier les données graphiques associées au premier élément cartographique afin de réduire la taille de la représentation visuelle du premier élément cartographique pour permettre la visualisation du deuxième élément cartographique qui est occulté.

7. Procédé selon la revendication 1 comprenant en outre les étapes suivantes :
identifier un deuxième seuil en réponse à la réception d'un signal provenant du dispositif d'entrée (136), le deuxième seuil étant différent du premier seuil prédéterminé ;
identifier la partie de la première pluralité d'éléments cartographiques avec des niveaux de priorité associés au-dessus du deuxième seuil en réponse au fait que le deuxième seuil est inférieur au premier seuil prédéterminé ;
modifier les données graphiques associées à chaque élément cartographique dans la partie identifiée de la première série d'éléments cartographiques afin de générer des données graphiques supplémentaires avec un niveau de détail accru pour chaque élément cartographique dans la partie identifiée de la première pluralité d'éléments cartographiques ; et
générer un deuxième affichage de la carte pour la région géographique identifiée avec le dispositif d'affichage (132) en réponse à l'identification du deuxième seuil, le deuxième affichage de la carte étant généré en utilisant les données graphiques supplémentaires avec le niveau de détail accru pour la partie identifiée de la première pluralité d'éléments cartographiques.

8. Procédé selon la revendication 7, la modification des données graphiques pour générer les données graphiques supplémentaires avec le niveau de détail accru comprenant en outre l'étape suivante :
modifier les données graphiques associées à au moins un élément cartographique dans la partie identifiée de la première pluralité d'éléments cartographiques pour convertir la représentation visuelle de l'au moins un élément cartographique d'un graphique bidimensionnel en une représentation visuelle tridimensionnelle de l'élément cartographique.

9. Procédé selon la revendication 8, comprenant en outre l'étape suivante :
générer une animation de l'au moins un élément cartographique dont la hauteur augmente du graphique bidimensionnel à la représentation visuelle tridimensionnelle.

10. Système de navigation (100), comprenant :
i) un dispositif d'affichage (132) configuré pour générer un affichage d'une carte ;
ii) un dispositif d'entrée (136) configuré pour recevoir une entrée correspondant à un seuil sélectionné pour l'affichage d'éléments cartographiques dans la carte ;
iii) une mémoire (116) configurée pour stocker une base de données (160) comprenant des données géographiques, une pluralité d'éléments cartographiques, des données graphiques associées à chacun de la pluralité d'éléments cartographiques, et chaque élément cartographique de la pluralité d'éléments cartographiques étant associé à un niveau de priorité dans la base de données (160) ; et
iv) un processeur (108) connecté de manière opérationnelle au dispositif d'affichage (136), au dispositif d'entrée (136) et à la mémoire (116), le processeur (108) étant configuré pour :
a) identifier une région géographique à afficher sur une carte ;
b) identifier une première pluralité d'éléments cartographiques qui sont situés dans la région géographique identifiée à partir de la base de données (160) ;
c) identifier une partie de la première pluralité d'éléments cartographiques avec les niveaux de priorité associés qui sont en dessous d'un premier seuil prédéterminé ;
d1) modifier les données graphiques associées à chaque élément cartographique dans la partie identifiée de la première pluralité d'éléments cartographiques pour générer des données graphiques avec un niveau de détail réduit pour chaque élément cartographique dans la partie identifiée de la première pluralité d'éléments cartographiques ;
d2) où la modification des données graphiques comprend de modifier les données graphiques associées à au moins un élément cartographique dans la partie identifiée de la première pluralité d'éléments cartographiques pour faire passer la représentation visuelle de l'au moins un élément cartographique d'une représentation visuelle tridimensionnelle à une représentation graphique bidimensionnelle ;
e) générer un premier affichage de la carte pour la région géographique identifiée avec le dispositif d'affichage (132), le premier affichage de la carte comprenant une représentation visuelle pour la première pluralité d'éléments cartographiques, avec le premier affichage étant généré en utilisant le graphique bidimensionnel pour ledit au moins un élément cartographique dans la partie identifiée de la première pluralité d'éléments cartographiques ;
le système de navigation étant **caractérisé en ce que** le processeur est en outre configuré pour :
f) ajuster, avec le dispositif d'entrée actionné par un opérateur, le premier seuil prédéterminé et, lorsque le premier seuil prédéterminé change, générer une vue actualisée de la même région géographique identifiée avec des modifications apportées à la représentation des éléments cartographiques.

11. Système (100) selon la revendication 10, le processeur (108) étant en outre configuré pour :
identifier un deuxième seuil en réponse à la réception d'un signal provenant du dispositif d'entrée (136), le deuxième seuil étant différent du premier seuil prédéterminé ;
identifier une autre partie de la première pluralité d'éléments cartographiques avec des niveaux de priorité associés qui sont inférieurs au deuxième seuil ;
modifier les données graphiques associées à chaque élément cartographique dans l'autre partie de la première pluralité d'éléments cartographiques afin de générer des données graphiques avec un niveau de détail réduit pour chaque élément cartographique dans l'autre partie de la première pluralité d'éléments cartographiques ; et
générer un deuxième affichage de la carte pour la région géographique identifiée avec le dispositif d'affichage (132) en réponse à l'identification du deuxième seuil, le deuxième affichage de la carte étant généré en utilisant les données graphiques modifiées pour l'autre partie identifiée de la première pluralité d'éléments cartographiques.

12. Système (100) selon la revendication 10, le processeur (108) étant en outre configuré pour :
générer une animation avec le dispositif d'affichage (132) de l'au moins un élément cartographique dont la hauteur est réduite de la représentation visuelle tridimensionnelle au graphique bidimensionnel.

13. Système (100) selon la revendication 10, le processeur (108) étant en outre configuré pour :
générer le premier affichage de la carte sous la forme d'une représentation tridimensionnelle de la région géographique identifiée à l'aide du dispositif d'affichage (132) ;
identifier les données graphiques associées à un premier élément cartographique dans la première pluralité d'éléments cartographiques qui occulte une vue d'un deuxième élément cartographique dans la première pluralité d'éléments cartographiques dans la représentation tridimensionnelle de la région géographique identifiée ; et
modifier les données graphiques associées au premier élément cartographique en réponse à une première priorité associée au premier élément cartographique qui est inférieure à une deuxième priorité associée au deuxième élément cartographique.

14. Système (100) selon la revendication 13, le processeur (108) étant en outre configuré pour :
modifier les données graphiques associées au premier élément cartographique afin de réduire l'opacité de la représentation visuelle du premier élément cartographique pour permettre la visualisation du deuxième élément cartographique qui est occulté.

15. Système (100) selon la revendication 13, le processeur (108) étant en outre configuré pour :
modifier les données graphiques associées au premier élément cartographique afin de réduire la taille de la représentation visuelle du premier élément cartographique pour permettre la visualisation du deuxième élément cartographique qui est occulté.

16. Système (100) selon la revendication 10, le dispositif d'entrée (136) comprenant en outre :
un capteur de reconnaissance de gestes (140) configuré pour identifier un mouvement prédéterminé d'un opérateur pour sélectionner le seuil.
